# EUROPEAN PATENT SPECIFICATION

(11) **EP 4 606 536 B1**
(45) Date of publication and mention of the grant of the patent: **12.08.2026**
(21) Application number: 24382174.1
(22) Date of filing: 20.02.2024
(51) Int. Cl.: B65H 31/30, B25J 15/00

(54) **DEVICE FOR HANDLING ELEMENTS**
VORRICHTUNG ZUR HANDHABUNG VON ELEMENTEN
DISPOSITIF DE MANIPULATION D'ÉLÉMENTS

(43) Date of publication of application: 27.08.2025
(73) Proprietor: Open Mind Ventures, S.L., 08700 Igualada (Barcelona) (ES)
(72) Inventor: BALSELLS MERCADE, Antoni, 08700 IGUALADA (Barcelona) (ES); GUIMERÀ PEDROLA, Antoni, 08700 IGUALADA (Barcelona) (ES); VALLÈS CUYÀS, Javier, 08700 IGUALADA (Barcelona) (ES); DE LA CALLE PRAT, Dídac, 08700 IGUALADA (Barcelona) (ES)
(74) Representative: Herrero & Asociados, S.L.

(56) References cited:
- EP-A1- 0 749 923
- EP-A1- 4 177 023
- CN-U- 204 957 870
- JP-U- S5 655 245

## Description

### Object of the invention

The present invention relates to a device for handling a stack of sheet elements that are placed adjacent to each other. In particular, the device is especially designed to capture, suspend and move a stack of sheet elements, such as pieces of textile materials, sheets of paper or cardboard or thin flexible or rigid metal sheets, adjacent to other stacks and resting on a flexible surface, such as a modular brush surface, without undoing the stack of sheet material or affecting adjacent stacks.

### Background to the invention

The preparation of a stack of laminate elements for processing, such as a stack of fabric parts, a stack of printing foils or metal foils for printing, may require their separation from adjoining stacks. In many cases, the processing of such stacks of laminate elements involves the cutting of various closed shapes (pieces, patterns, etc.) within the area of such a stack of laminate material; such cut pieces require separation from adjoining material.

Various devices are known for handling stacks of adjacent sheet materials. When several stacks are adjacent to each other, separated only by a cutting groove, access through the cutting groove to the bottom of the stack is very difficult in order to capture, lift and suspend the stack without affecting the other stacks adjacent to the captured stack.

Existing grippers do not allow access through this very small cutting slot and therefore can only access the bottom of the stacks in areas where there is no adjacent stack, which limits the degrees of freedom in handling and therefore the possibility of more efficient handling.

There are known devices that are designed to act on a stack of sheets only through their free side edges, which does not solve the above-mentioned problem.

Therefore, there is still a need for an adjacent device for handling elements that allows the handling of such stacks also through small gaps, such as cutting grooves generated after longitudinal cutting of large stacks.

To overcome these disadvantages, the device for handling elements described in document EP 4 177 023 A1, by the same applicant as the present application, was devised, which describes an device for handling elements, the elements being separated by at least one slot or gap and comprising a rod with a stop, a rod which is longitudinally movable and rotatable with respect to the rod, comprising a flange at one end, so that a gripper is defined between the stop and the flange for gripping an element.

JPS5655245U discloses a board extrusion unit that presses horizontally against one end face of the uppermost board of a stack of loaded boards to cause the other end face of said uppermost board to protrude beyond the end faces of the other boards.

CN204957870U discloses a mechanical vacuum suction device comprising a mechanical running frame, an air nozzle, a spring pressing device, a conveying roller, a conveyor belt, a device operator, a roller, a storage support chuck, a suction cup, a suction hole, a beam bracket, an advance and retreat device, a rocker slider mechanism, a force closing spring and a cam rocker mechanism.

EP0749923A1 discloses a device for picking up stacks of products from a support, wherein a head for picking up a stack of products from a flat support is provided with presser elements adapted to act on the stack and with a flexible lamina adapted to enter between the stack and the flat support.

### Description of the invention

The subject matter of the invention consists of a device for handling adjacent elements, e.g. stacks of sheet elements, boxes or the like, which enables the capture, suspension and displacement of elements, a stack of sheet elements, such as, for example, stacked pieces of fabric which are subjected to multi-layer or single-layer cutting processes, following clothing patterns, without unravelling said stack of sheet material, and which said stacks of elements are supported on a floating surface, such as, for example, a brush surface.

Furthermore, the aim is to provide an improved device with respect to the one described in document EP 4 177 023 A1 cited above.

The device according to the present invention is defined in claim 1 and is configured to be able to access the lower part of the element, and thus to be able to proceed to the manipulation of the elements, without the need to access only through free edges of said elements, but even through gaps or small longitudinal grooves generated in the cutting processes, thus overcoming the limitations of the current state of the art.

Other optional features are defined in the dependent claims.

For this purpose, according to one embodiment, the device for handling elements comprises:
- a body provided with a stop;
- a stem which is longitudinally movable and rotatable relative to the body, the stem comprising a flange at one end, the upper surface of the flange defining a gripping surface, such that a gripper is defined between the stop and the gripping surface of the flange for holding an element,
wherein
- the stop is movable between a free position and a holding position, the stop moving from its free position to its holding position when the stem moves longitudinally relative to the body, in turn actuating a compression spring; and
- the body also comprises a closing spring which actuates a locking element that locks the stem to the body.

In addition, the body preferably comprises a spiral which causes the stem to rotate when the body moves longitudinally relative to the stem;

In this way, the rotation of the stem is automatic when the device is pushed against the surface on which the element rests, and its locking in the holding or closing position is also automatic, facilitating the manipulation of the element.

Preferably, the locking stop is movable with respect to the body, rotating about its central axis and slightly tilting in the direction of the gripper, in order to give a certain degree of freedom to the clamped stack of material, making the material clamped with the edge of the gripping surface and thus preventing the sheet material from accidentally escaping from the gripper.

Advantageously, the locking element is connected to an unlocking button, the unlocking button being movable between a release position and a holding position, so that to unlock the stem relative to the body the unlocking button is moved from its holding position to its release position. Additionally, when the stem is locked and the unlocking button is in the position to unlock the stem, the unlocking button is locked by the compression spring and internal locking parts to prevent accidental opening of the stem during handling or transport.

Thus, to unlock the device, or return it to the unlocked or open position, the stem must be pressed and the unlocking button pressed simultaneously.

Advantageously, the unlocking button is of a different colour to the rest of the gripper housing to act as a distinctive open/closed gripper identification feature for visual detection elements.

In addition, the gripper of the invention may have additional windows on the sides, also in a different colour, to make it easier to distinguish between open/closed gripper by visual detection elements in the event that the gripper is tilted, not vertical, etc.

Preferably, the stem comprises a heel located at the end provided with the flange, and the heel protrudes at this end with respect to the flange, so that it is the part that contacts the surface where the elements to be handled are supported.

In addition, the heel can be movable with a compression effect, for example with a spring, to facilitate the rotation of the stem during the closing of the gripper, and to give vertical stability to the assembly once the gripper is locked, waiting to be picked up with the stack of sheet material attached.

Preferably, the gripping surface of the stem flange is a movable, rotating and tilting surface, to facilitate the insertion of the clamp through the slot between two stacks of sheet material, to provide a larger support surface once the gripper is closed, and to give a certain degree of freedom to the stack of clamped material, making the material clamped with the edge of said surface and thus preventing the sheet material from escaping from the gripper by accident. In this case, as the stop and the gripping surface of the flange are both rotatable, a more secure clamping is obtained, preventing the clamped material from slipping out of the gripper.

In addition, the stem preferably comprises a plurality of complementary teeth with the locking element, although these teeth could be replaced by any friction or similar system.

In addition, the upper stop of the gripper may have support arms, to keep the gripper in an upright position, once closed and waiting to be picked up, on certain sheet materials that are very light.

According to a preferred embodiment, the compression spring comprises a cap for moving the locking element, and, in addition, the unlock button comprises a locking part that stops the movement of the locking element.

Additionally, the gripper of the invention contains a gripping head to facilitate the gripping and transport of said gripper with the stack of sheet material attached. Said head has a shape suitable for gripping by automations and/or robotic arms, suitable for moving on overhead rail systems, etc.

Advantageously, said gripping head has ferromagnetic elements, to facilitate its capture with a magnetic element installed in an automation or robotic arm.

Additionally, the gripper of the invention contains an electronic tag, to record, identify and track the clamped material throughout the industrial process. This electronic tag can be located anywhere on the gripper (the body, the gripping head, etc.).

The gripper of the present invention is suitable for manual use, with one person dispensing multiple grippers, and for automated use, with a robotic arm dispensing multiple grippers, or working a single gripper as a fixed tool on a robotic arm.

### Description of the drawings

In order to complement the description being made and in order to assist in a better understanding of the features of the invention, in accordance with a preferred example of a practical embodiment thereof, a set of drawings is attached hereto as an integral part of the said description, in which the following is illustratively and non-limitingly depicted:

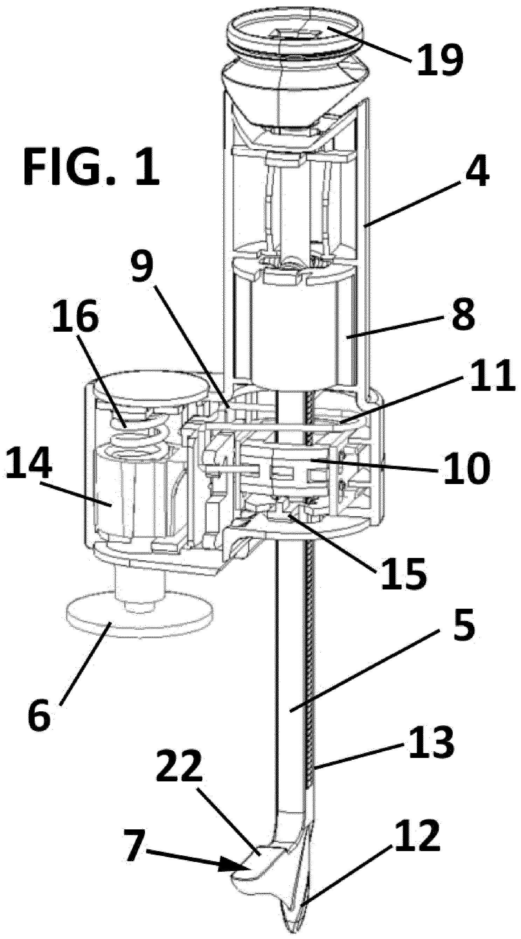

Figure 1 is a perspective section view of the device for handling elements according to the present invention in its released or open position;

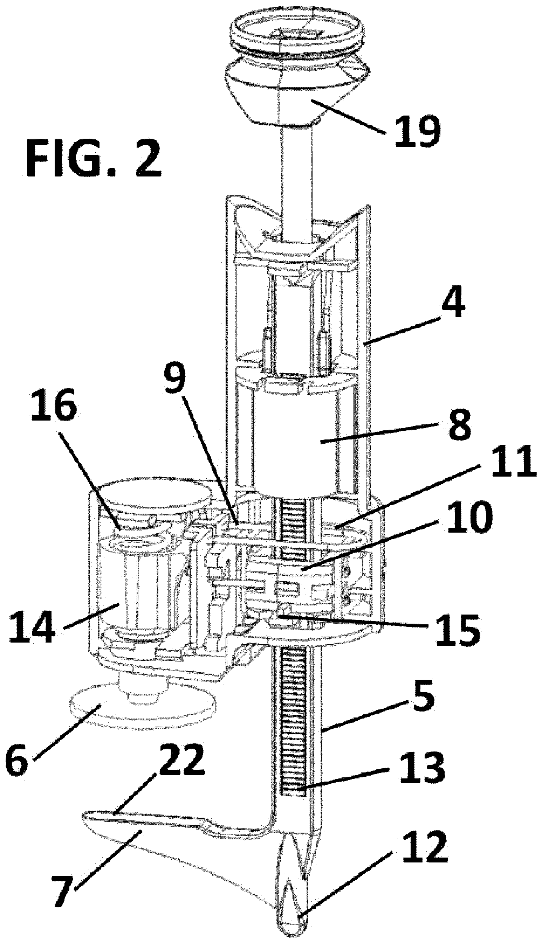

Figure 2 is a perspective section view of the device for handling elements according to the present invention in its clamped or closed position;
Figure 3 is a top plan view of the device for handling elements according to the present invention in its released or open position, where the position of the unlock button can be seen without protruding substantially with respect to the body of the device;
Figure 4 is a top plan view of the device for handling elements according to the present invention in its clamped or closed position, where the position of the unlock button can be seen protruding with respect to the body of the device;

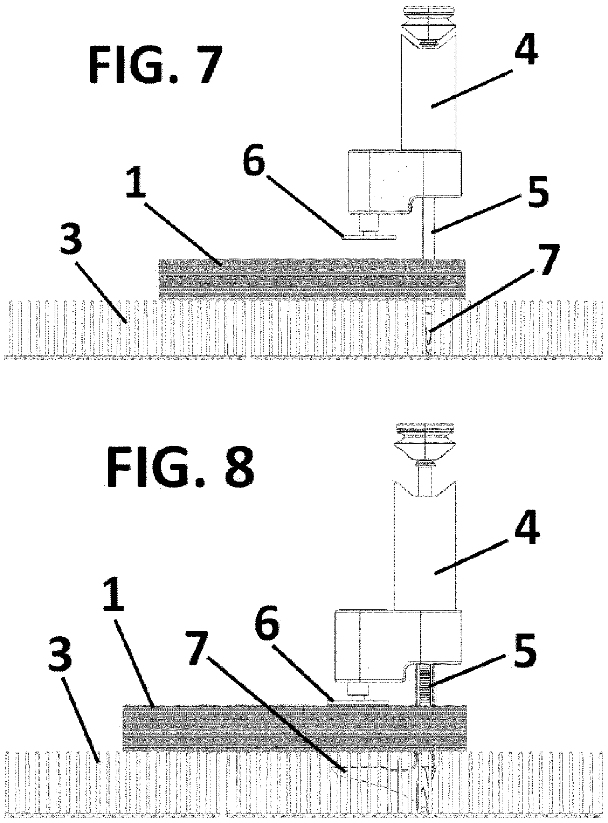

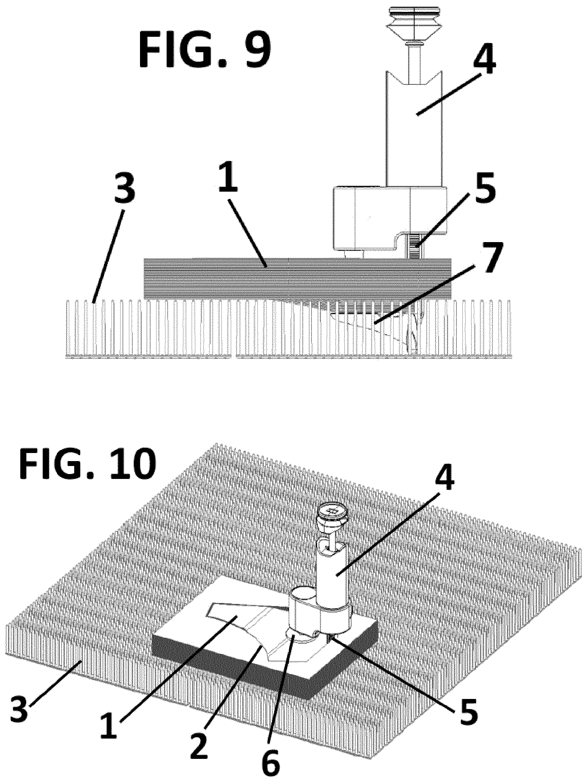

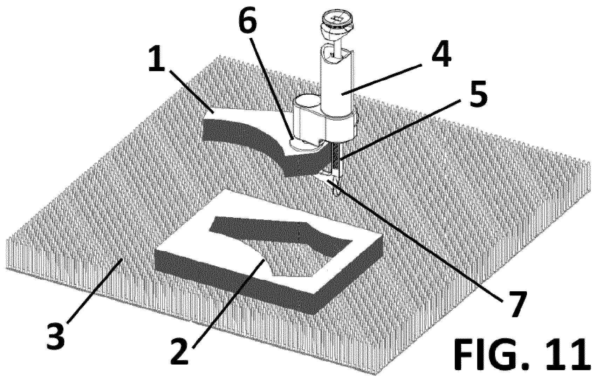

Figures 5 to 11 are perspective and side elevation views showing the operation of the device for handling elements according to the present invention;

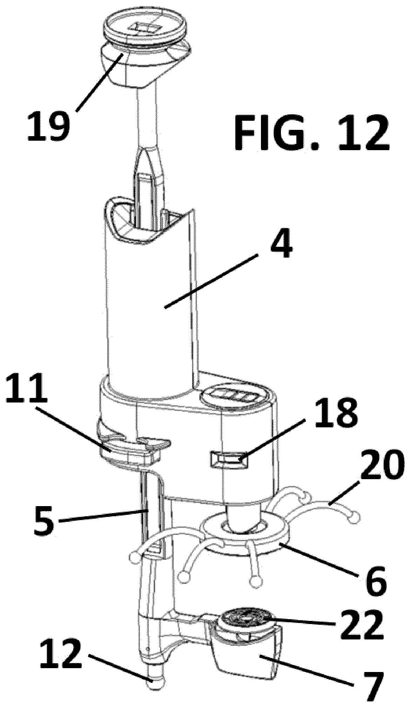

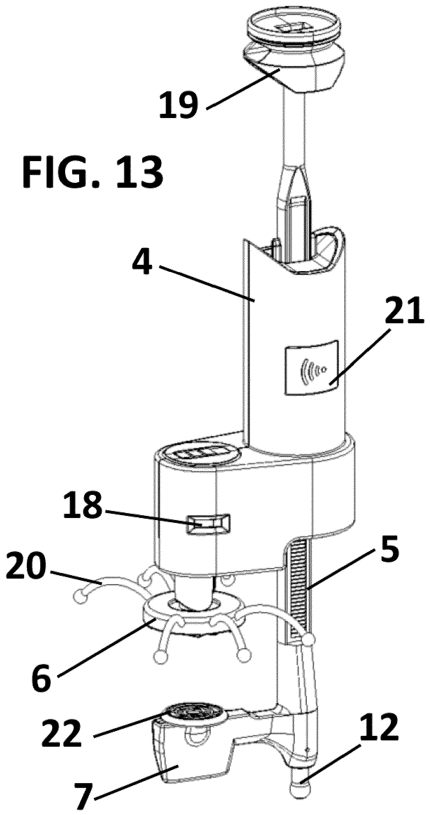

Figures 12 and 13 are perspective views of the device for handling elements according to the present invention, according to an alternative embodiment;

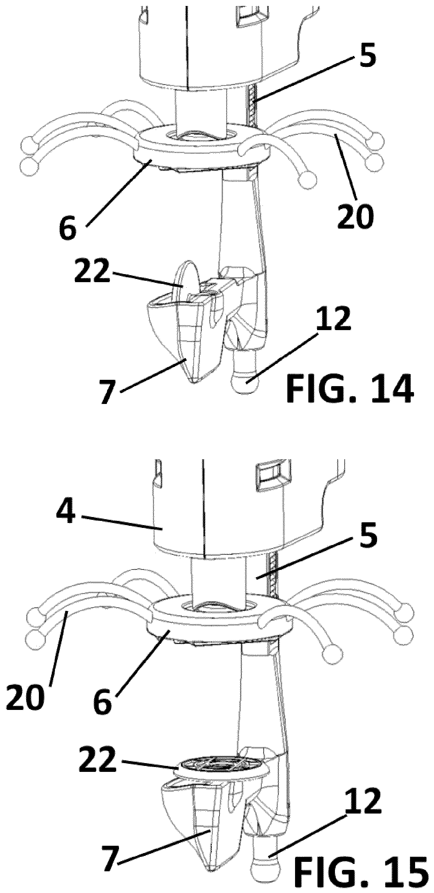

Figures 14 and 15 are perspective views of the device for handling elements according to the present invention, according to said alternative embodiment;

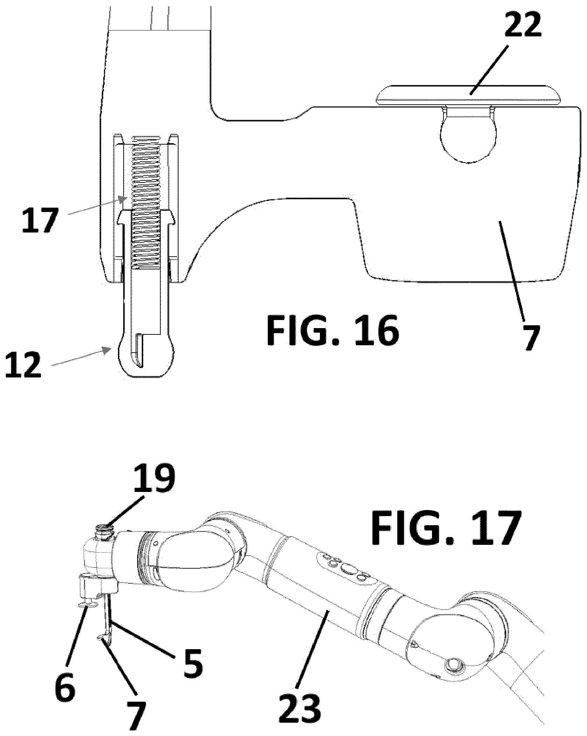

Figure 16 is a detail section view of the heel area; and
Figure 17 is a perspective view of the manipulation device according to the present invention used with a robotic arm.

### Description of preferred embodiments of the invention

A detailed explanation of preferred embodiments of the subject matter of the present invention is given below with the aid of the figures referred to above.

First of all, it should be noted that for reasons of simplicity the present invention is made with reference to a stack of sheet elements. However, the device and method according to the present invention can also be used to handle any other adjacent elements, separated by a groove or a gap.

The described device for handling stacks of sheet elements allows the capture, suspension and displacement of a stack (1) of sheet elements, from a plurality of consecutive and adjacent stacks (1), separated from each other by respective slots (2) generated by a previous procedure of multilayer cutting of the stack (1) of sheet elements.

The consecutive stacks (1) are arranged on a floating surface (3), such as a conveyor belt or similar. In the embodiment shown in the attached figures, the surface (3) consists of a series of flexible brushes on which the stacks (1) rest, but could also be foam, carpet or similar.

The device is configured to allow access to the underside of the lower sheet elements of the stack (1) through the slots (2).

The device comprises a body (4), the interior of which houses a stem (5), and the body (4) has an upper end, through which it is attachable to a robotic arm (23) or similar element.

Said body (4) comprises a stop (6), which in the embodiment shown is displaced with respect to the rest of the body (4), which is associated with a compression spring (16) fitted with a cap (14), which pushes the stop (6), as will be described later.

In addition, around the said stop (6), the gripper can incorporate support arms (20), to keep the gripper in an upright position, once closed and waiting to be picked up, on certain very light sheet materials.

The piston stem (5) can move longitudinally with respect to the body (4) and can rotate with respect to its longitudinal axis.

Said stem (5) comprises a flange (7) at one of its ends, the lower end according to the figures, which is substantially perpendicular with respect to the longitudinal axis of the stem (5).

As illustrated in the attached figures, the flange (7) preferably has rounded edges to facilitate movement and prevent possible damage to the sheet elements of the stack (1) and the brushes forming the surface (3).

This flange (7) defines a clamping base (22) with its upper surface.

The gripping surface (22) may be formed by a separate part of the stem (5), in this case being a movable gripping surface (22), which due to the effect of the insertion of the gripper between the stacks of laminate material said movable gripping surface (22) is in a vertical position, and due to the effect of the rotation of the stem (5) and contact with the lower part of the stack (1) of laminate material to be clamped said movable gripping surface (22) is in a horizontal position.

This gripping surface (22), together with the stop (6), defines a gripping surface for holding a stack (1) of sheet elements for handling.

Furthermore, the stem (5) comprises a heel (12) at the end provided with the flange (7). Said heel (12) protrudes at said end with respect to the flange (7). Furthermore, said heel (12) has a rounded shape at its distal part, in order to prevent damage to the brushes forming the surface (3).

Furthermore, said heel (12) can be movable with a compression effect, for example, with a spring (17), to facilitate the rotation of the stem during the closing of the gripper, and to give stability to the assembly once the gripper is locked, but waiting to be picked up with the stack of sheet material held in place.

The stem (5) also comprises a plurality of teeth (13) which are complementary to a locking element (10) of the stem (5), the operation of which will be described below.

In addition, the clamp subject of the invention contains an electronic tag (21), for wirelessly recording, identifying and tracking the material clamped in the clamp throughout the industrial process.

Additionally, the gripper subject of the invention contains a gripping head (19) to facilitate the gripping and transport of said gripper with the stack (1) of sheet material attached. Said head (19) has a shape suitable for gripping by automations and/or robotic arms (23), suitable for moving on overhead rail systems, etc.

Advantageously, said gripping head (19) has ferromagnetic elements, to facilitate its capture with a magnetic element installed in an automation or robotic arm (23).

The operation of the device in accordance with the present invention is as follows, with the clamp defined by the stop (6) and the gripping surface (22) in its open or free position, the stop (6) is oriented above the point where the element (1) is to be clamped, orienting the stem (5) to coincide with the groove (2).

The operator then only moves the clamp vertically downwards until it closes and locks the mechanism, leaving the element (1) clamped.

The inner workings of the device are described below.

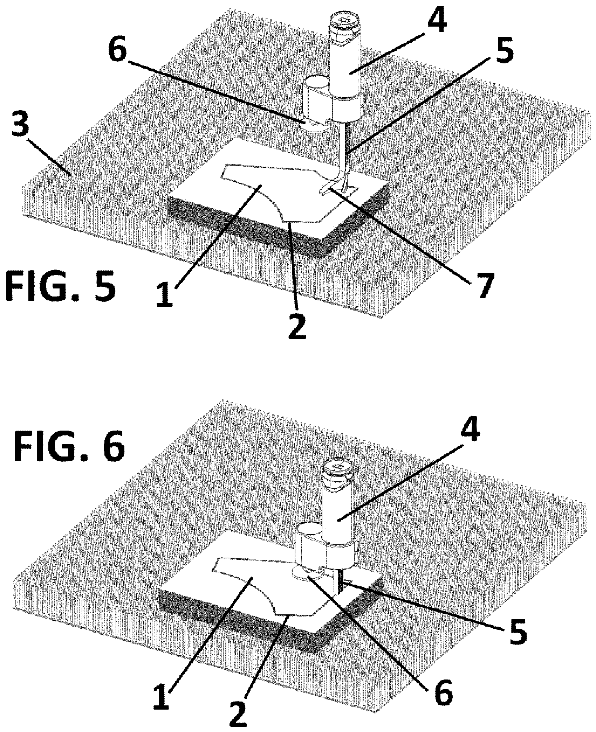

As shown in figure 5 and described above, the stop (6) is oriented above the point where the element (1) is to be clamped, orienting the stem (5) to coincide with the groove (2).

The operator then holds the upper end of the stem (5), moving the body (4) along the stem (5) until the lower end of the stem (5) contacts the surface (3) through the heel (12).

When the heel (12) of the stem (5) touches the surface (3), the stem (5) remains vertically still, while the body (4) continues to move downwards.

As the body (4) continues to move downwards, a spiral (8) in the body (4) causes the stem (5) to rotate automatically about its longitudinal axis and the flap (7) to position itself in alignment below the stop (6).

As the body (4) continues to move downwards, when the element (1) contacts the stop (6), the downward movement of the body (4) causes the compression spring (16) associated with the stop (6) to compress.

When the compression spring (16) reaches the tare force, the cap (14) of the compression spring (16) moves vertically the locking element (10) associated with a closing spring (9). This spring tare force may be different depending on the material of the stack (1) to be clamped.

This movement triggers this closing spring (9), which in turn actuates the locking element (10) of the piston stem (5), blocking the vertical movement of the piston rod (5), and the element (1) is held in place by the force of the compression spring (16).

In turn, when the locking spring (9) is actuated, the locking element (10) of the piston stem (5) moves an unlocking button (11) outwards.

In addition, when the locking spring (9) is actuated and the compression spring (16) moves downwards, the locking element (10) of the piston stem (5) moves downwards, its movement being fixed by a locking part (15) of the unlocking button (11).

This adds the security that, in order to unlock the clamp, a vertical movement of the piston stem (5) is first required, followed by the activation of the unlocking button (11).

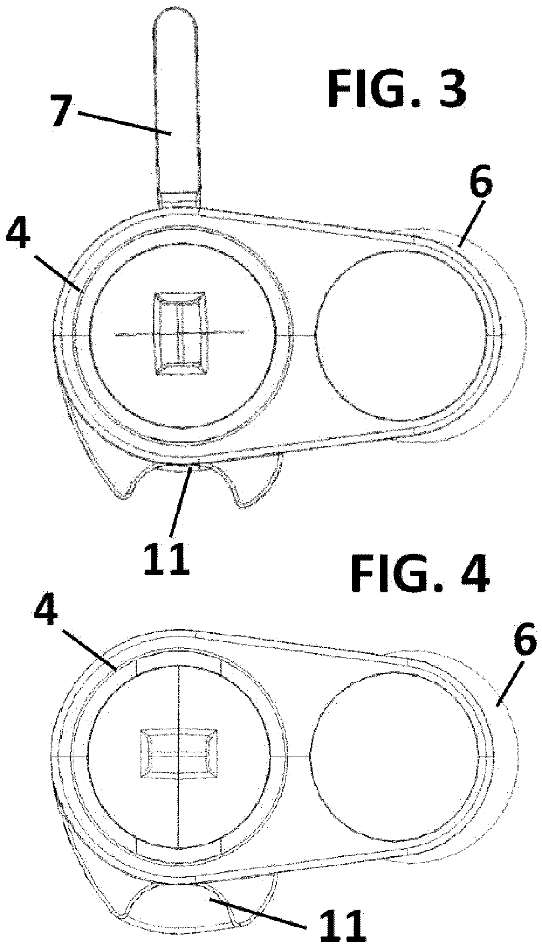

Furthermore, as can be seen in figures 3 and 4, the unlock button (11) is substantially hidden when the gripper is in the free or open position and protrudes when the gripper is in the clamped or closed position.

Such an unlocking button (11) may have a partially or completely different color from the rest of the device, e.g. yellow, so that the unlocking button (11) may be an indicator of the gripper being closed for an automatic machine vision system, thus being an element which does not stand out if the gripper is open, and which stands out if the gripper is closed.

Additionally, the gripper of invention may be provided with windows (18) on the sides to show a different color from the rest of the device when the gripper is closed, and facilitate detection for an automatic machine vision system.

Alternatively, the gripper of this invention may not have the spiral (8), resulting in a smaller body (4), the resulting gripper being suitable for automatic insertion systems, such as robotic arms, since such automatic systems would do the turning that the spiral (8) would otherwise do.

Although reference has been made to a specific embodiment of the invention, it is obvious to a person skilled in the art that the device described is susceptible to numerous variations and modifications, and that all the details mentioned can be replaced by technically equivalent ones, without departing from the scope of protection defined by the appended claims.

## Claims

1. Device for handling a stack of sheet elements, the elements (1) being separated by at least one groove or gap (2), comprising:
- a body (4) provided with a stop (6);
- a stem (5) which is longitudinally movable and rotatable relative to the body (4), the stem comprising a flange (7) at one end, with a gripping surface (22), such that a clamp is defined between the stop (6) and the gripping surface (22) for holding an element (1), wherein
- the stop (6) is movable between a release position and a holding position, the stop (6) moving from its release position to its holding position when the stem (5) moves longitudinally relative to the body (4) by actuating a compression spring (16); and **characterised in that**
- the body (4) also comprises a closing spring (9) which actuates a locking element (10) that locks the stem (5) relative to the body (4).

2. Device for handling elements according to claim 1, wherein the body (4) comprises a spiral (8) that causes the stem (5) to rotate when the stem (5) moves longitudinally with respect to the body (4).

3. Device for handling elements according to claim 1 or 2, wherein the locking element (10) is connected with an unlocking button (11), the unlocking button (11) being movable between a free position and a holding position, so that to unlock the stem (5) with respect to the body (4) the unlocking button (11) is moved from its holding position to its release position.

4. Device for handling elements according to any one of the preceding claims, wherein the stem (5) comprises a heel (12) located at the end provided with the flange (7).

5. Device for handling elements according to claim 4, wherein the heel (12) protrudes at said end with respect to the flange (7).

6. Device for handling elements according to any one of the preceding claims, wherein the stem (5) comprises a plurality of teeth (13) complementary with the locking element (10).

7. Device for handling elements according to any one of the preceding claims, wherein the compression spring (16) comprises a cap (14) for moving the locking element (10).

8. Device for handling elements according to claim 3, wherein the unlocking button (11) comprises a locking part (15) which stops the movement of the locking element (10).

9. Device for handling elements according to any one of the preceding claims, wherein the stop (6) is movable relative to the body (4).

10. Device for handling elements according to any one of the preceding claims, wherein the stop (6) is tiltable.

11. Device for handling elements according to any one of the preceding claims, wherein the gripping surface (22) is movable relative to the rest of the flange (7).

12. Device for handling elements according to any one of claims 4 or 5, wherein the heel (12) is movable relative to the stem (5).

13. Device for handling elements according to any one of the preceding claims, comprising support arms (20) positioned around said stop (6).

14. Device for handling elements according to any one of the preceding claims, comprising an electronic tag (21).

15. Device for handling elements according to any one of the preceding claims, also comprising a gripping head (19).

16. Device for handling elements according to any one of the preceding claims, comprising side windows (18) showing an indication.

## Patentansprüche

1. Vorrichtung zum Handhaben eines Stapels von Lagenelementen, wobei die Elemente (1) durch zumindest eine Rille oder einen Spalt (2) getrennt sind, mit folgenden Merkmalen:
- einem Körper (4), der mit einem Anschlag (6) versehen ist;
- einem Schaft (5), der längs beweglich und relativ zu dem Körper (4) drehbar ist, wobei der Schaft einen Flansch (7) an einem Ende, mit einer Greifoberfläche (22) aufweist, derart, dass eine Klammer zwischen dem Anschlag (6) und der Greifoberfläche (22) zum Halten eines Elements (1) definiert ist, wobei
- der Anschlag (6) zwischen einer Freigabeposition und einer Halteposition beweglich ist, wobei der Anschlag (6) sich auf seiner Freigabeposition in seine Halteposition bewegt, wenn der Schaft (5) sich durch Betätigen einer Druckfeder (16) längs relative zu dem Körper (4) bewegt; und **dadurch gekennzeichnet, dass**
- der Körper (4) auch eine Schließfeder (9) aufweist, die ein Verriegelungselement (10) betätigt, das den Schaft (5) relativ zu dem Körper (4) verriegelt.

2. Vorrichtung zum Handhaben von Elementen gemäß Anspruch 1, wobei der Körper (4) eine Spirale (8) aufweist, die bewirkt, dass sich der Schaft (5) dreht, wenn sich der Schaft (5) längs in Bezug auf den Körper (4) bewegt.

3. Vorrichtung zum Handhaben von Elementen gemäß Anspruch 1 oder 1, wobei das Verriegelungselement (10) mit einem Entriegelungsknopf (11) verbunden ist, wobei der Entriegelungsknopf (11) zwischen einer freien Position und einer Halteposition beweglich ist, so dass zum Entriegeln des Schafts (5) in Bezug auf den Körper (4) der Entriegelungsknopf (11) aus seiner Halteposition in seine Freigabeposition bewegt wird.

4. Vorrichtung zum Handhaben von Elementen gemäß einem der vorhergehenden Ansprüche, wobei der Schaft (5) einen Absatz (12) aufweist, der sich an dem Ende befindet, das mit dem Flansch (7) versehen ist.

5. Vorrichtung zum Handhaben von Elementen gemäß Anspruch 4, wobei der Absatz (12) an dem Ende in Bezug auf den Flansch (7) vorsteht.

6. Vorrichtung zum Handhaben von Elementen gemäß einem der vorhergehenden Ansprüche, wobei der Schaft (5) eine Mehrzahl von Zähnen (13) aufweist, die komplementär zu dem Verriegelungselement (10) sind.

7. Vorrichtung zum Handhaben von Elementen gemäß einem der vorhergehenden Ansprüche, wobei die Druckfeder (16) eine Kappe (14) zum Bewegen des Verriegelungselements (10) aufweist.

8. Vorrichtung zum Handhaben von Elementen gemäß Anspruch 3, wobei der Entriegelungsknopf (11) ein Verriegelungsteil (15) aufweist, das die Bewegung des Verriegelungselements (10) stoppt.

9. Vorrichtung zum Handhaben von Elementen gemäß einem der vorhergehenden Ansprüche, wobei der Anschlag (6) relativ zu dem Körper (4) beweglich ist.

10. Vorrichtung zum Handhaben von Elementen gemäß einem der vorhergehenden Ansprüche, wobei der Anschlag (6) neigbar ist.

11. Vorrichtung zum Handhaben von Elementen gemäß einem der vorhergehenden Ansprüche, wobei die Greifoberfläche (22) relativ zu dem Rest des Flanschs (7) beweglich ist.

12. Vorrichtung zum Handhaben von Elementen gemäß einem der Ansprüche 4 oder 5, wobei der Absatz (12) relativ zu dem Schaft (5) beweglich ist.

13. Vorrichtung zum Handhaben von Elementen gemäß einem der vorhergehenden Ansprüche, die Trägerarme (20) aufweist, die um den Anschlag (6) herum positioniert sind.

14. Vorrichtung zum Handhaben von Elementen gemäß einem der vorhergehenden Ansprüche, die eine elektronische Kennzeichnung (21) aufweist.

15. Vorrichtung zum Handhaben von Elementen gemäß einem der vorhergehenden Ansprüche, die auch einen Greifkopf (19) aufweist.

16. Vorrichtung zum Handhaben von Elementen gemäß einem der vorhergehenden Ansprüche, die Seitenfenster (18) aufweist, die eine Anzeige zeigen.

## Revendications

1. Dispositif de manipulation d'une pile d'éléments en feuilles, les éléments (1) étant séparés par au moins une rainure ou un interstice (2), comprenant :
- un corps (4) pourvu d'une butée (6) ;
- une tige (5) qui est mobile longitudinalement et rotative par rapport au corps (4), la tige comprenant une bride (7) à une extrémité, avec une surface de préhension (22), de telle sorte qu'une pince est définie entre la butée (6) et la surface de préhension (22) pour maintenir un élément (1), dans lequel
- la butée (6) est mobile entre une position de libération et une position de maintien, la butée (6) passant de sa position de libération à sa position de maintien lorsque la tige (5) se déplace longitudinalement par rapport au corps (4) en actionnant un ressort de compression (16) ; et **caractérisé en ce que**
- le corps (4) comprend également un ressort de fermeture (9) qui actionne un élément de verrouillage (10) qui verrouille la tige (5) par rapport au corps (4).

2. Dispositif de manipulation d'éléments selon la revendication 1, dans lequel le corps (4) comprend une spirale (8) qui entraîne la tige (5) en rotation lorsque la tige (5) se déplace longitudinalement par rapport au corps (4).

3. Dispositif de manipulation d'éléments selon la revendication 1 ou 2, dans lequel l'élément de verrouillage (10) est relié à un bouton de déverrouillage (11), le bouton de déverrouillage (11) étant mobile entre une position libre et une position de maintien, de sorte que pour déverrouiller la tige (5) par rapport au corps (4) le bouton de déverrouillage (11) est déplacé de sa position de maintien à sa position de libération.

4. Dispositif de manipulation d'éléments selon l'une quelconque des revendications précédentes, dans lequel la tige (5) comprend un talon (12) situé à l'extrémité munie de la bride (7).

5. Dispositif de manipulation d'éléments selon la revendication 4, dans lequel le talon (12) fait saillie au niveau de ladite extrémité par rapport à la bride (7).

6. Dispositif de manipulation d'éléments selon l'une quelconque des revendications précédentes, dans lequel la tige (5) comprend une pluralité de dents (13) complémentaires de l'élément de verrouillage (10).

7. Dispositif de manipulation d'éléments selon l'une quelconque des revendications précédentes, dans lequel le ressort de compression (16) comprend un capuchon (14) pour déplacer l'élément de verrouillage (10).

8. Dispositif de manipulation d'éléments selon la revendication 3, dans lequel le bouton de déverrouillage (11) comprend une pièce de verrouillage (15) qui arrête le mouvement de l'élément de verrouillage (10).

9. Dispositif de manipulation d'éléments selon l'une quelconque des revendications précédentes, dans lequel la butée (6) est mobile par rapport au corps (4).

10. Dispositif de manipulation d'éléments selon l'une quelconque des revendications précédentes, dans lequel la butée (6) est inclinable.

11. Dispositif de manipulation d'éléments selon l'une quelconque des revendications précédentes, dans lequel la surface de préhension (22) est mobile par rapport au reste de la bride (7).

12. Dispositif de manipulation d'éléments selon l'une quelconque des revendications 4 ou 5, dans lequel le talon (12) est mobile par rapport à la tige (5).

13. Dispositif de manipulation d'éléments selon l'une quelconque des revendications précédentes, comprenant des bras de support (20) positionnés autour de ladite butée (6).

14. Dispositif de manipulation d'éléments selon l'une quelconque des revendications précédentes, comprenant une étiquette électronique (21).

15. Dispositif de manipulation d'éléments selon l'une quelconque des revendications précédentes, comprenant également une tête de préhension (19).

16. Dispositif de manipulation d'éléments selon l'une quelconque des revendications précédentes, comprenant des fenêtres latérales (18) présentant une indication.
